# EUROPEAN PATENT SPECIFICATION

(11) **EP 2 365 713 B1**
(45) Date of publication and mention of the grant of the patent: **25.01.2017**
(21) Application number: 10168824.0
(22) Date of filing: 08.07.2010
(51) Int. Cl.: H04W 36/32

(54) **Handover decision apparatus and method between broadcast and unicast services and the terminal device thereof**
Vorrichtung und Verfahren zur Entscheidung der Übergabe zwischen Broadcast- und Unicast-Diensten und Endgerätevorrichtung dafür
Appareil et procédé de décision de transfert entre les services de monodiffusion et de multidiffusion et le terminal associé

(30) Priority: 02.03.2010 TW 099106015
(43) Date of publication of application: 14.09.2011
(73) Proprietor: Industrial Technology Research Institute, Hsinchu 31040 (TW)
(72) Inventor: Jiang, Jhih-Wei, Taipei County (TW); Chiao, Hsin-Ta, Nantou County (TW); Tsen, Chi-Te, Taipei County (TW); Lin, Akio, Taichung County (TW)
(74) Representative: Gee, Steven William

(56) References cited:
- Liu Cong, Liao Jianxin, Zhu Xiaomin, Zhang Huiyuan, Ni Ping: "AN EFFICIENT APPROACH FOR DVB-H HANDOVER IN DVB-H/UMTS HYBRID NETWORKS", JOURNAL OF ELECTRONICS (CHINA), vol. 25, no. 5 September 2008 (2008-09), pages 689-696, XP002637999, DOI: 10.1007/s11767-008-0008-9 Retrieved from the Internet: URL:http://www.springerlink.com/content/g3 7127192283v073/fulltext.pdf [retrieved on 2011-05-19]
- XIAOHUAN YAN ET AL: "A method for minimizing unnecessary handovers in heterogeneous wireless networks", WORLD OF WIRELESS, MOBILE AND MULTIMEDIA NETWORKS, 2008. WOWMOM 2008. 2008 INTERNATIONAL SYMPOSIUM ON A, IEEE, PISCATAWAY, NJ, USA, 23 June 2008 (2008-06-23), pages 1-5, XP031302799, ISBN: 978-1-4244-2099-5
- AHDI F ET AL: "Vertical handoff initiation using road topology and mobility prediction", WIRELESS COMMUNICATIONS AND NETWORKING CONFERENCE, 2006. WCNC 2006. IE EE LAS VEGAS, NV, USA 3-6 APRIL 2006, PISCATAWAY, NJ, USA,IEEE, PISCATAWAY, NJ, USA, 3 April 2006 (2006-04-03), pages 593-598, XP031331364, ISBN: 978-1-4244-0269-4

## Description

### TECHNICAL FIELD

The disclosure generally relates to a handover decision apparatus and method between broadcast and unicast services and the terminal device thereof.

### BACKGROUND

At present, the mobile TV service uses broadcast for data transmission services because of the cost and the related technology. The advantage is that the fixed bandwidth may provide services to any number of the users. In comparison, if a mobile network, such as, 3G, WiMAX, uses unicast service to provide mobile TV service, the demand on the bandwidth will increase proportionally to the number of the users. However, the bandwidth is limited. As the mobility of the mobile TV terminal is an important feature, when the user uses broadcast service to receive the mobile TV service, a process must be responsible for the evaluation and execution of the handover. When the terminal device moves into the coverage of a different broadcast signal source, such as, DVB-H cell, the handover is executed to continue the service. If the user moves into the coverage area of insufficient broadcast signals or interference signals, the service may be interrupted. In this case, a possible solution, for example, is to hand the mobile terminal over to a mobile network and to use unicast service to continue the service.

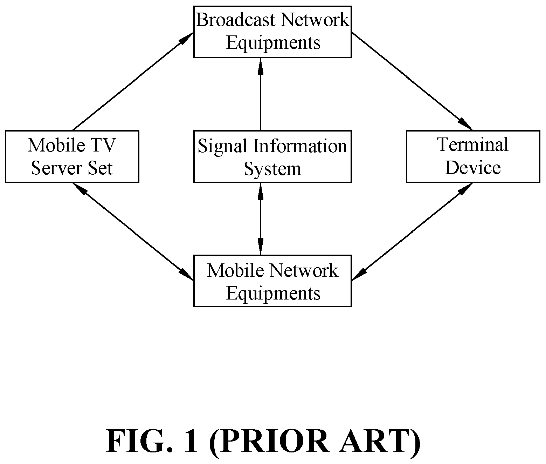

FIG. 1 shows a schematic view of an exemplary hybrid delivery system, where the terminal device needs to have the capabilities of receiving broadcast signal and using mobile network, as well as path prediction capability. As shown in FIG. 1, the broadcast network equipments refer to the head end equipment and wireless signal base station of the uni-directional broadcast network and the mobile network equipments refer to mobile network able to provide bi-directional communication, such as, 3G, 3.5G, WiFi, WiMAX, and so on. The signal information system refers to the system providing signal related information, and the mobile TV server set includes the servers providing mobile TV related services through broadcast network (broadcast) or mobile network (unicast), and the related services include, such as, real-time streaming service, file transfer, program menu, service protection and encryption, and so on.

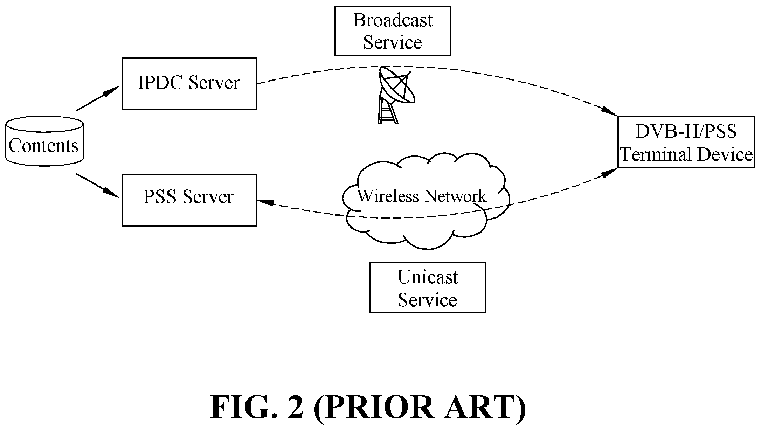

The switching between the broadcast service (e.g., DVB-H) and unicast service (e.g., packet-switched streaming service (PSS)) is as the exemplar shown in FIG. 2. If a user simultaneously has the capabilities of receiving DVB-H signal and using 3G mobile network, when the user uses DVB-H to receive the service transmitted by IPDC server, the corresponding PSS connection, such as 3GPP PSS, may be opened simultaneously and set as paused. The IPDC server may be of DVB-IPDC standard or OMA BCAST standard. When the user loses DVB-H signal, the user can switch to the unicast service (PSS) and requests to the PSS server for playing. When the user obtains the DVB-H signal again, the user may switch back to broadcast service. In this manner, the user may use both broadcast and unicast to use the mobile TV service and suitably switches between the two to achieve the service continuity.

In addition to the above DVB-H, the broadcast service technology may also be DVB-SH, ATSC-M/H, 3GPP MBMS, 3GPP E-MBMS, 3GPP2 BCMCS, WiMAX MBS, and so on.

U.S. patent No. 7,251,491 disclosed a system and method for using position, velocity or direction of motion estimates to support handover decisions. In one exemplary embodiment, when the velocity exceeds a threshold, the subscriber station switches to an umbrella cell of the wireless communication system. The umbrella cell includes at least a macro-level cell. The coverage area of the macro-level cell is included in the umbrella cell or overlapped with the umbrella cell. In another exemplary embodiment, when the location of the subscriber station is closer to a target cell and farther from a serving station, or when the subscriber station moves towards a target cell and away from a serving cell, the subscriber station will switch to the target cell.

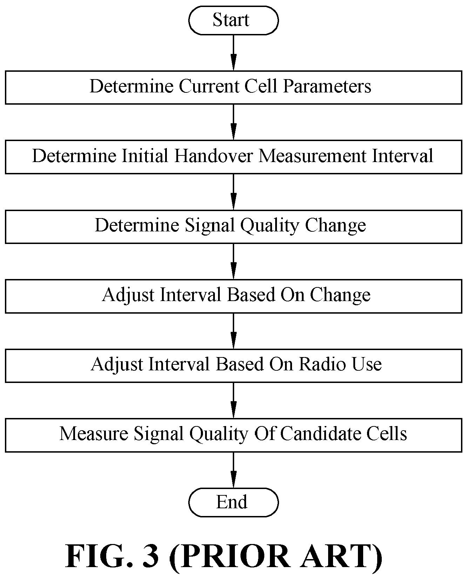

International Patent Publication No. WO 2006/097803 disclosed a method for adaptively determining a handover measurement interval. As shown in the exemplary flowchart of FIG. 3, the method is based on the monitored change of the cell parameters to change the surveillance time interval. When the change of the parameter is small, the surveillance interval may be lengthened to reduce the number of surveillance to save energy consumption. The method may be used to solve the switching problem between the DVB-H cells for subscribers.

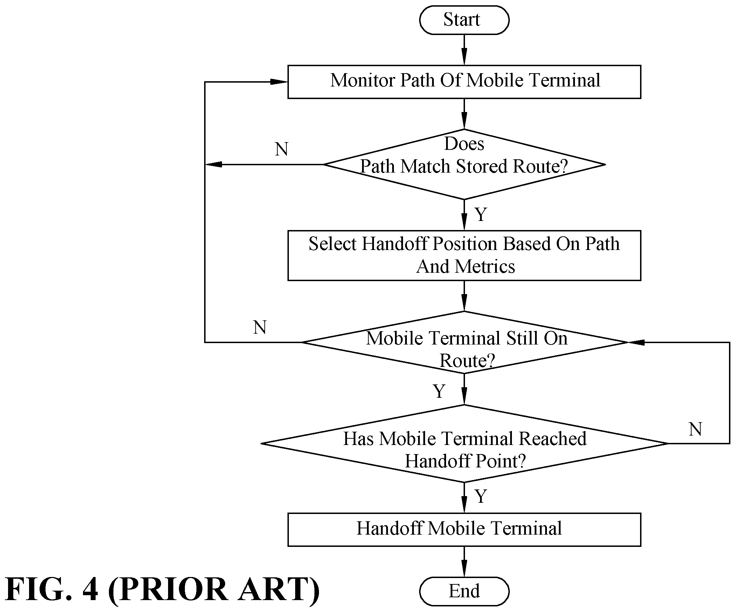

International Patent No. WO 01/58182 disclosed a method for using the geographic position of a mobile terminal device to support a handover decision in a wireless communication system. The method uses the historic data from previous experiences to support the communication switching to solve the switching problem of the mobile communication systems. As shown in FIG. 4, the mobile communication network observes the trajectory of the terminal device and finds the matching path. Then, based on the suggested position on the path, the communication switching is executed. When the handover occurs, the location in the network and the quality metric (success, fail) are recorded and the statistic results are used to improve the handover efficiency. The route in the operation flow is to find the route matching a pre-defined route through continuously observing the path of the terminal device.

The paper, "Loss-free Handover for IP Datacast over DVB-H Networks", appearing in IEEE ISCE 2005, Macau, June 2005, disclosed a phase shifting method to allow the DVB-H subscriber to perform seamless handover between cells. The method interleaves the burst duration of different cells to avoid overlapping, and adjusts the layout of the IP packet in each datacast interval so as to provide subscribers with more flexibility for communication switching.

The paper "An Efficient Approach for DVB-H Handover in DVB-H/UMTS Hybrid Networks" by Liu Cong et al, Journal of Electronics (China) vol. 25 no. 5 (September 2008), pages 689-696 discloses a handover procedure between digital video broadcasting services and unicast services for mobile terminal devices. The procedure involves the prediction of a path for the mobile device and the comparison of that path with the coverage provided by the broadcast network whereby to determine the locations where handover to the unicast service will be required.

The paper "A method for minimizing unnecessary handovers in heterogeneous wireless networks", by Xiaohuan Yan et al., IEEE, 23 June 2008, discloses a handover algorithm which reduces the number of handovers by detecting when a predicted traveling distance inside a WLAN cell is smaller than a threshold value.

### SUMMARY

The exemplary embodiments of the disclosure may provide a handover decision apparatus and method between broadcast and unicast services and the terminal device thereof.

According to the present invention, there is provided a handover decision apparatus (540) between broadcast and unicast services, included in a terminal device (500; 1700),
said apparatus comprising:
a planned unicast path module (610) comprising means for using a first inputted data, at least including a predicted route for a mobile terminal device (500; 1700) and signal related information, wherein a signal information module (550) is adapted to process the signal related information from a broadcast reception module (530) or a mobile network module (560); and a handover evaluation and judge module (620) for performing a handover evaluation and judging the timing of handover execution, and for reaching a handover decision between broadcast and unicast services,
characterised in that
the planned unicast path module (610) also comprises means adapted to find and label all mandatory unicast paths along said predicted route for said mobile terminal device, said mandatory unicast paths being paths during which the mobile terminal device cannot receive service via broadcast signal, and must use unicast signal to continue the service, and
adapted to merge any two mandatory unicast paths having a time interval between ending time of a first mandatory unicast path and starting time of a second mandatory unicast path less than a threshold into a longer mandatory unicast path, and adapted to obtain a series of planned unicast paths from all generated mandatory unicast paths; and
in that the handover evaluation and judge module (620) also comprises means adapted to use a second inputted data, at least including said series of planned unicast paths to evaluate and determine the timing and execution of a handover and to support the handover decision between broadcast and unicast services.

There is also provided a terminal device (500; 1700), having capabilities of both receiving broadcast signal and unicast signal using mobile network, including a handover decision apparatus (540) as herein defined, and further comprising:
a signal information module (550), comprising means for providing signal related information to said handover decision apparatus (540) as reference for planning said series of planned unicast paths along said predicted route, wherein the signal information module (550) processes the signal related information from a broadcast reception module (530) or a mobile network module (560); and
a mobile TV service layer module (520), comprising means for receiving said handover decision from said handover decision module, and for controlling related actions of handover.

There is also provided a handover decision method between broadcast and unicast services, applicable to a terminal device (500; 1700), said method comprising:
using, by a planned unicast path module (610), a predicted route of a mobile terminal device and signal related information, wherein a signal information module (550) processes the signal related information from a broadcast reception module (530) or a mobile network module (560), and
supporting a handover decision between broadcast and unicast services,
characterised in that the planned unicast path module (610) also finds and labels all mandatory unicast paths along said predicted route for said mobile terminal device, said mandatory unicast paths being paths during which the mobile terminal device cannot receive service via broadcast signal, and must use unicast signal to continue the service; and
in that for said all mandatory unicast paths, the method includes merging any two mandatory unicast paths having a time interval between ending time of a first mandatory unicast path and starting time of a second mandatory unicast path less than a threshold into a longer mandatory unicast path, and obtaining a series of planned unicast paths from all generated mandatory unicast paths; and
using said series of planned unicast paths to evaluate and determine the timing and execution of a handover and to support the handover decision between broadcast and unicast services.

The foregoing and other features, aspects and advantages of the present invention will become better understood from a careful reading of a detailed description provided herein below with appropriate reference to the accompanying drawings.

### BRIEF DESCRIPTION OF THE DRAWINGS

FIG. 1 shows a schematic view of an exemplary hybrid mobile TV system.
FIG. 2 shows an exemplar illustrating a handover process between broadcast and unicast services.
FIG. 3 shows an exemplary flowchart illustrating a method for adaptively determining a handover measurement interval.
FIG. 4 shows an exemplary flowchart illustrating a method by using location to support a handover decision in a wireless communication system.
FIG. 5 shows an exemplary schematic view of a hybrid mobile TV terminal device, consistent with certain disclosed embodiments.
FIG. 6 shows an exemplary schematic view of a handover decision apparatus, consistent with certain disclosed embodiments.
FIG. 7 shows an exemplary flowchart of handover decision method between broadcast and unicast services, consistent with certain disclosed embodiments.
FIG. 8 shows an exemplary flowchart of finding mandatory unicast paths (MUPs), consistent with certain disclosed embodiments.
FIGS. 9A-9D show an exemplar illustrating how to plan a series of planned unicast paths (PUPs), consistent with certain disclosed embodiments.
FIG. 10 shows an exemplary flowchart of planning a series of PUPs, consistent with certain disclosed embodiments.
FIG. 11A and FIG. 11B show exemplars illustrating without and with using the disclosed embodiments in handover process, respectively.
FIG. 12 shows an exemplary flowchart of using the PUPs to support a handover decision between broadcast and unicast services in the situation of not referring to PUP when using broadcast signals, consistent with certain disclosed embodiments.
FIG. 13 shows an exemplary flowchart of using the PUPs to support a handover decision between broadcast and unicast services in the situation of referring to PUPs regardless of using broadcast signal or unicast service, consistent with certain disclosed embodiments.
FIG. 14 shows an exemplary working exemplar illustrating how a hybrid mobile TV system of DVB-H and 3GPP PSS using PUPs to support a handover decision between broadcast and unicast services, consistent with certain disclosed embodiments
FIG. 15 shows an exemplary flowchart describing the handover approach of not referring to PUPs when using broadcast signal, consistent with certain disclosed embodiments.
FIG. 16 shows an exemplary flowchart describing the handover approach of referring to PUPs when using broadcast signal, consistent with certain disclosed embodiments.
FIG. 17 shows an exemplary schematic view of a terminal device, consistent with certain disclosed embodiments.

### DETAILED DESCRIPTION OF THE EXEMPLARY EMBODIMENTS

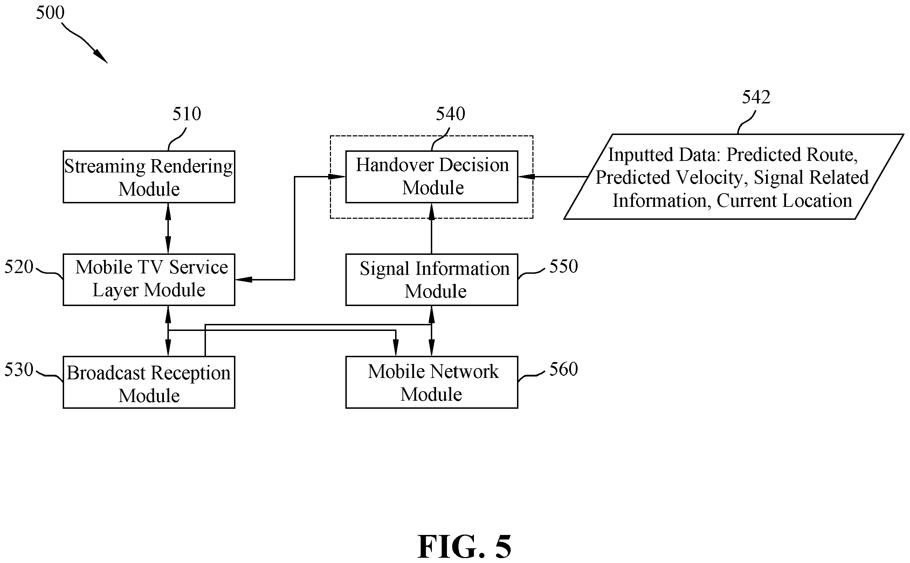

The exemplary disclosed embodiments are to dynamically obtain the route, aided by the signal related information, to plan the path segment able to use unicast service along the predicted route of the mobile terminal device or to perform a handover evaluation and judge the timing of handover execution. Based on position in the path segment planned to use the unicast service, the exemplary disclosed embodiments reach a handover decision. The disclosed handover decision apparatus may be applicable to a hybrid mobile TV terminal device, as shown in FIG. 5.

FIG. 5 shows an exemplary schematic view of a hybrid mobile TV terminal device, consistent with certain disclosed embodiments, wherein the terminal device has the capabilities of receiving broadcast signal and using mobile network, as well as, route prediction capability. In the exemplary embodiment of FIG. 5, terminal device 500 may comprise a streaming rendering module 510, a mobile-TV service layer module 520, a broadcast reception module 530, a handover decision apparatus 540 a signal information module 550 and a mobile network module 560. In addition to receiving service through broadcast reception module 530, terminal device 500 may also use unicast service to continue the service through the handover decision between broadcast and unicast services via handover decision apparatus 540 when losing broadcast signal. The following describes the features and the operations of the components of terminal device 500.

Streaming rendering module 510 may render the streaming service transmitted from mobile TV service layer module 520. Handover decision apparatus 540 receives inputted data 542, such as, predicted route, predicted velocity, signal related information, current location of the mobile terminal device, to plan the path segment using unicast service, called planned unicast paths (PUPs), or to perform a handover evaluation or judge the execution timing of the handover. When handover decision apparatus 540 determines that handover is necessary, mobile TV service layer module 540 may be used to control related activities for switching services, such as, service data processing, service connection control, and so on.

Signal information module 550 processes signal related information from broadcast reception module 530 or mobile network module 560, and the information is provided to handover decision apparatus 540 as reference for planning PUPs for the mobile terminal device along the predicted route. The signal related information may be, such as, location and the size of the base station, and signal distribution chart, or labeled tunnel, underground or forest area, i.e., the areas that are difficult for the broadcast signals to reach or suffer interference, or path with poor signal reception caused by any reason.

Mobile TV service layer module 520 receives the mobile TV service data from broadcast reception module 530 or mobile network module 560, and has the capabilities for service discovery and service selection, as well as to control the process of transmitting the streaming service data to streaming rendering module 510, and may communicate with a service server via a mobile network.

On the other hand, mobile TV service layer module 520 receives the handover decision from handover decision apparatus 540 and executes the actions related to handover between broadcast and unicast services. For example, it may start and stop receiving broadcast service, and activate, close, and pause the unicast service. The handover between broadcast and unicast services allows some flexibility in implementation, for example, either direct handover or dual reception of both broadcast and unicast services for a period of time and then handover. Mobile TV service layer module 520 may also be responsible for executing the handover between the base stations using broadcast signal.

Broadcast reception module 530 may use, for example, broadcast network equipments, to receive data transmitted by IP-based mobile TV server set, such as, service related data, signal related information, and so on.

Mobile network module 560 may use, for example, mobile network equipment to communicate with a unicast service server to receive the multimedia data transmitted by the server or possible signal related information.

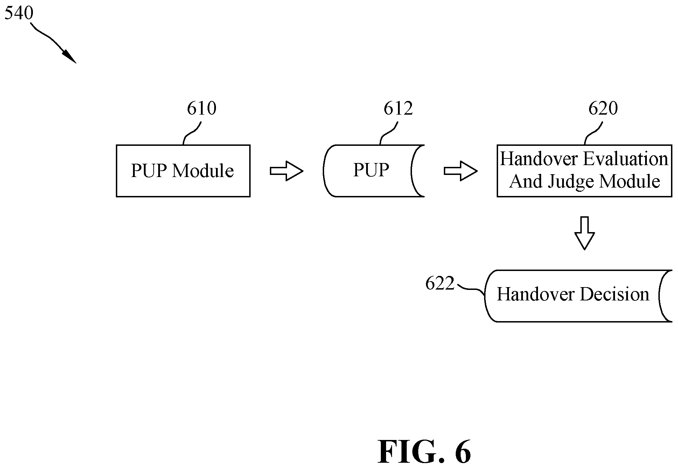

FIG. 6 shows an exemplary schematic view of handover decision apparatus 540, consistent with certain disclosed embodiments. Referring to FIG. 6, handover decision apparatus 540 may comprise a PUP module 610, and a handover evaluation and judge module 620. PUP module 610 may use an inputted data, such as, a predicted route of a mobile terminal device, predicted velocity, signal related information, and so on, to find the path segment having to use unicast service for the mobile terminal device along the predicted route, and then plan a series of PUPs 612 using the unicast service along the predicted route. Handover evaluation and judge module 620 may use the inputted data, such as, PUP 612, current location of the mobile terminal device, and so on, for handover evaluation and judging the execution timing of handover, and reach a handover decision 622 between broadcast and unicast services.

In other words, handover decision apparatus 540 of FIG. 6 may provide a framework for planning the PUPs of mobile TV terminal device along the predicted route, and the framework then uses the result of the planning to support the handover decision. PUP module 610 may dynamically plan the PUPs and handover evaluation and judge module 620 may reach a handover decision 622 to avoid the frequent handovers of terminal device between broadcast and unicast services and reduce the signal monitoring.

In the exemplary embodiment of FIG. 6, the predicted route of mobile terminal device may be obtained in various ways. For example, the route of the terminal device may be predicted through navigation/positioning system, and the navigation/positioning system may be implemented in many ways. The source of predicted velocity data may be, such as, the estimation by the terminal device with capability of calculating velocity, the speed limit information on the road section provided by navigation/positioning system, or from TTI (TPEG broadcast RDS-TMS broadcast). The signal related information, such as, location and size of the base station, signal distribution chart, and so on, may be transmitted from broadcast network or mobile network. In addition, the information on the areas expected having poor broadcast signal reception, such as, tunnel, underground or forest, can be obtained from the geo-information of the navigation/positioning system. The current location of the mobile terminal device may be provided by, such as, GPS or similar positioning systems, such as WiFi, and so on.

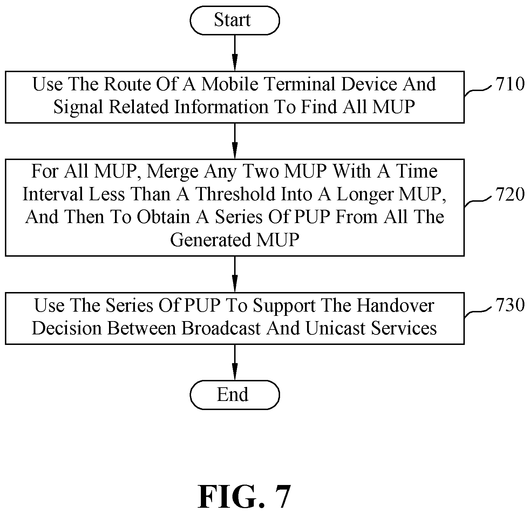

FIG. 7 shows an exemplary flowchart of handover decision method between broadcast and unicast services, consistent with certain disclosed embodiments. Referring to FIG. 7, in step 710, the predicted route of a mobile terminal device and signal related information is used to find all the mandatory unicast paths (MUPs). MUPs refer to the paths during which the mobile terminal device cannot receive service via broadcast signal, and must use unicast signal to continue the service. In other words, the mobile terminal device must use unicast service during these paths.

Then, step 720 is, for all MUPs, to merge any two MUPs with a time related parameter, such as a time interval, less than a threshold into a longer MUP, and then to obtain a series of PUPs from all the generated MUPs. In step 730, the series of PUPs is used to support a handover decision between broadcast and unicast services.

In step 710, due to certain factors, the mobile terminal device may encounter poor broadcast signal reception during the predicted route, such as, low received signal strength indicator (RSSI), low signal to noise ratio (SNR), high packet error ratio (PER), high MPE-FEC frame error rate (MFER). In these paths, the mobile terminal device must use unicast service, i.e., MUPs. The above factors may be divided into two categories. The first category is caused by the incomplete deployment of the base stations or insufficient broadcast signal coverage caused by the geographical conditions, such as mountains or forest. This type of information may be the location and size of the base stations, or more detailed data, such as, charts on signal distribution, signal strength and so on. The second category is the environmental or other interferences, such as, tunnel, underground or indoor areas where the broadcast signal cannot easily penetrate. The data may be provided by the geo-information of the navigation system transmitted via broadcast network or mobile network to the mobile terminal device. When the predicted route and velocity of the mobile terminal device or signal related information change, a different series of PUPs may be planned.

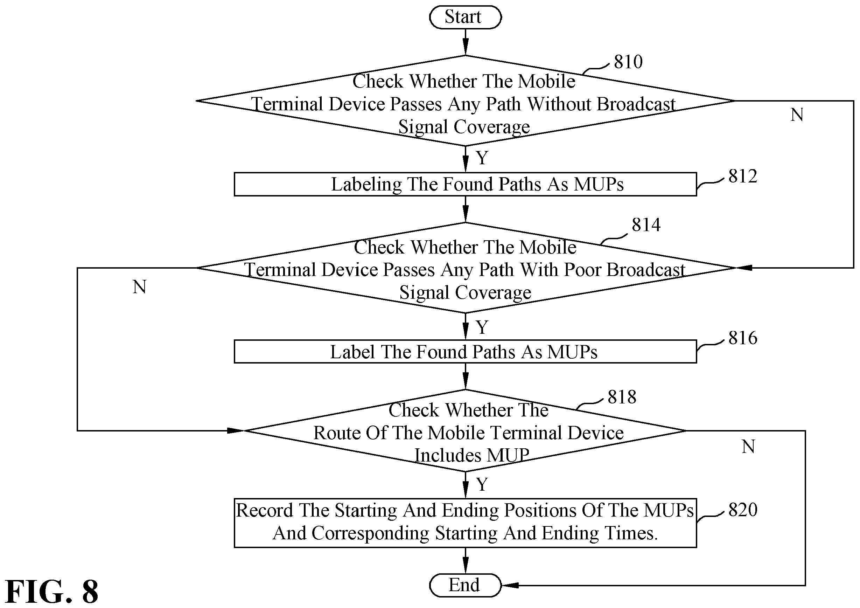

FIG. 8 shows an exemplary flowchart of finding mandatory unicast paths (MUP), consistent with certain disclosed embodiments. Referring to FIG. 8, first, it may use the predicted route of the mobile terminal device and signal related information to check whether the mobile terminal device passes any path without broadcast signal coverage (step 810). If so, labeling the found paths as MUPs (step 812). Otherwise, it may check whether the mobile terminal device passes any path with poor broadcast signal coverage (step 814). If so, step 816 is to label the found paths as MUPs. Step 818 is to check whether the predicted route of the mobile terminal device includes any MUPs. If not, the process terminates; otherwise, step 820 is to record the starting and ending positions of the MUPs and corresponding starting and ending times before the process terminates.

MUPs may use geographic coordinate to label the starting and ending positions. The calculation of starting and ending times may be estimated by the length of the road segment divided by the speed limit or average velocity of the terminal device. The time information may also be provided through reference to the external information, such as, the arrival and departure time of the public transportation system.

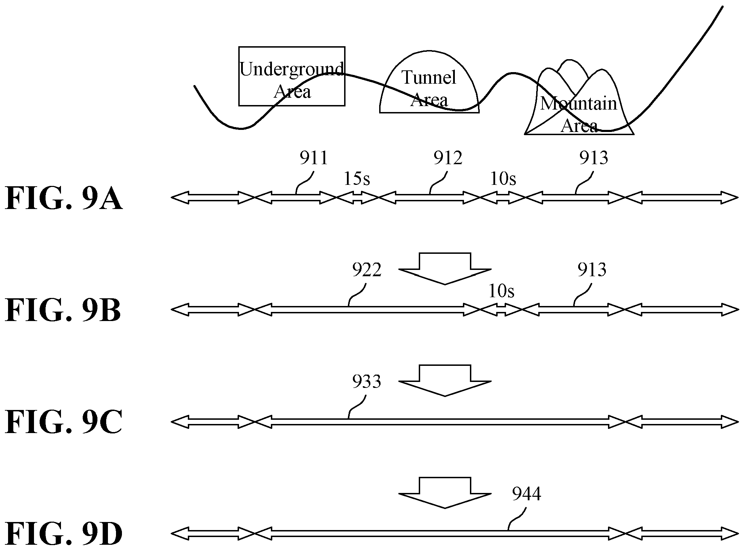

In step 720, if the time related parameter is the time interval, the time interval between the two MUPs is calculated by the difference between the ending of the most recent MUP and the starting of the next MUP. If the interval is shorter than a threshold of the ping-pong effect caused by handover between broadcast and unicast services, these two MUPs are merged into a longer MUP. The threshold of ping-pong effect depends on the strategy used by the unicast and broadcast services. According to step 720, if two MUPs overlap, the two MUPs may also be merged into a new MUP. In this manner, all the MUPs are checked and MUPs with short interval are merged to avoid frequent handovers between broadcast and unicast services. The final result of the merge is a series of PUPs. FIG. 9A-FIG. 9D show an exemplar illustrating how to plan a series of PUPs, consistent with certain disclosed embodiments.

In FIG. 9A, using the exemplary flowchart of FIG. 8, a mobile terminal device finds three MUPs 911-913 in the predicted route, and the recorded starting and ending times show that the interval between MUPs 911 and MUP 912 is 15 seconds, and the interval between MUP 912 and MUP 913 is 10 seconds. Assume that the threshold of the ping-pong effects is 20 seconds (as aforementioned, the threshold may be determined by the usage strategy of the broadcast and unicast services used by the mobile terminal device). Accordingly, MUP 911 and MUP 912 are merged into a longer MUP 922, as shown in FIG. 9B. Similarly, MUP 922 and MUP 913 are merged into a longer MUP 933, as shown in FIG. 9C. After checking all three MUPs 911-913, the final MUP 933 of FIG. 9C is recorded and labeled as a series of PUP 944, as shown in FIG. 9D.

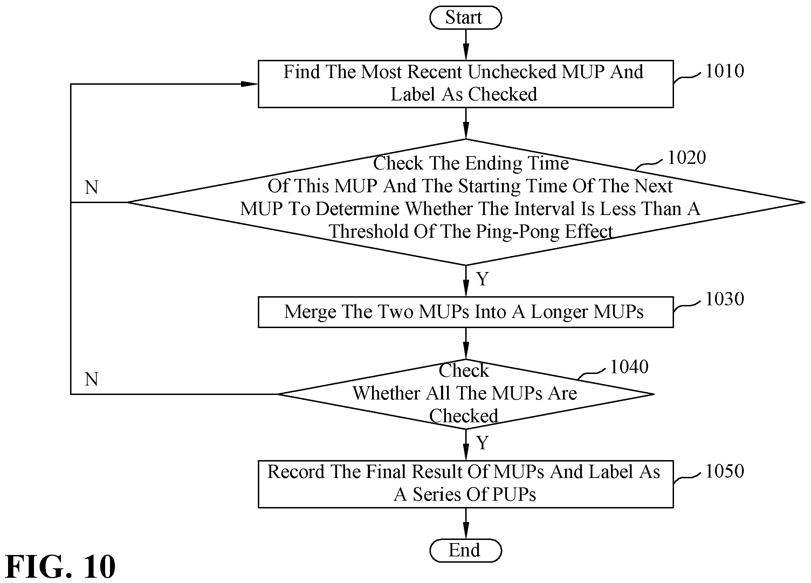

Accordingly, the exemplary flowchart of planning a series of PUPs may be shown as steps 1010, 1020, 1030, 1040 and 1050 of FIG. 10, consistent with certain disclosed embodiments. Wherein, step 1010 is to find the most recent unchecked MUP and label as checked; step 1020 is to check the ending time of this MUP and the starting time of the next MUP to determine whether the interval is less than a threshold of the ping-pong effect; step 1030 is to merge the two MUPs into a longer MUP.; step 1040 is to check whether all the MUPs are checked; and step 1050 is to record the final result of MUP and label as a series of PUPs.

After a series of PUPs is planned, the mobile terminal device uses the PUPs to support the handover decision between the broadcast and unicast services.

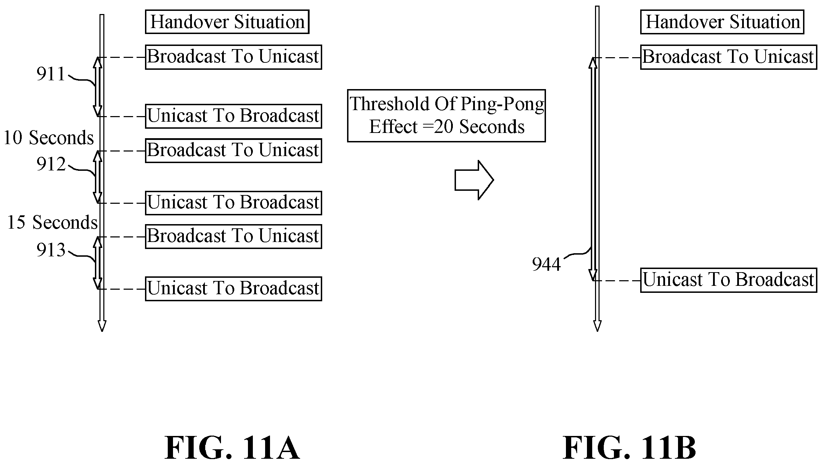

Take the mobile terminal device in the predicted route in FIG. 9A as example. FIG. 11A and FIG. 11B show the handovers of the exemplars without and with using the disclosed exemplary embodiments, respectively, where the ping-pong effect threshold is 20 seconds. Comparing the exemplars in FIG. 11A and FIG. 11B, the number of handovers in FIG. 11A is 6 and the number of handovers in FIG. 11B is 2. Hence, the disclosed exemplary embodiments may avoid excessively frequent handovers between broadcast and unicast services.

With the planning PUPs, the disclosed exemplary embodiments provide two approaches to support the handover decision between the broadcast and unicast services. The first approach is not to refer to PUPs when using broadcast signals, and the second approach is to refer to PUP regardless of using either broadcast signal or unicast signal.

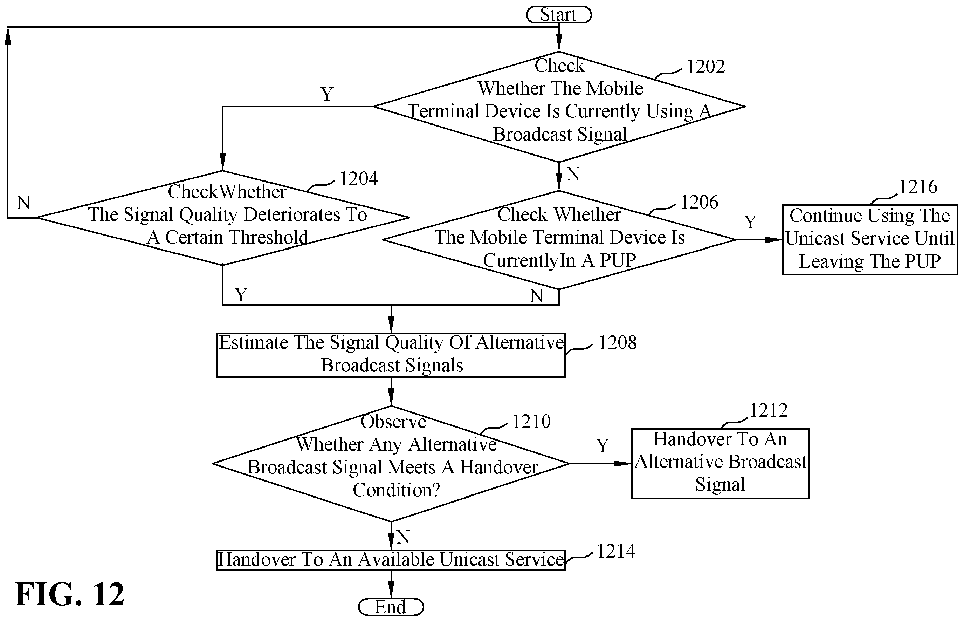

The first approach may be divided into two situations, i.e. currently using broadcast signal and currently using unicast signal. In the situation of currently using broadcast signal, the rule is to search for an alternative broadcast signal for replacement when the signal quality deteriorates to a certain degree. If there is alternative broadcast signal, the mobile terminal device is handed over to one or the best of the broadcast signals; otherwise, handed over to unicast service. In the situation of currently using unicast signal, the rule is to continue using the unicast service when on PUP. If not on PUP, the mobile terminal device starts to search for available broadcast signals. If there is broadcast signal, the mobile terminal device is handed over to one or the best of the broadcast signals. FIG. 12 shows an exemplary flowchart of the first approach, consistent with certain disclosed embodiments.

Referring to FIG. 12, step 1202 is to check whether the mobile terminal device is currently using a broadcast signal. If so, step 1204 is to check whether the signal quality deteriorates to a certain threshold. When reaching the threshold, step 1208 is to estimate the signal quality of alternative broadcast signals and step 1210 is to observe whether any alternative broadcast signal meets a handover condition? If so, step 1212 is to handover to an alternative broadcast signal; otherwise, step 1214 is to handover to an available unicast service. If the current situation is not using a broadcast signal, step 1206 is to check whether the mobile terminal device is currently in a PUP. If in PUP, step 1216 is to continue using the unicast service until leaving the PUP; otherwise, step 1208 is to estimate the signal quality of alternative broadcast signals.

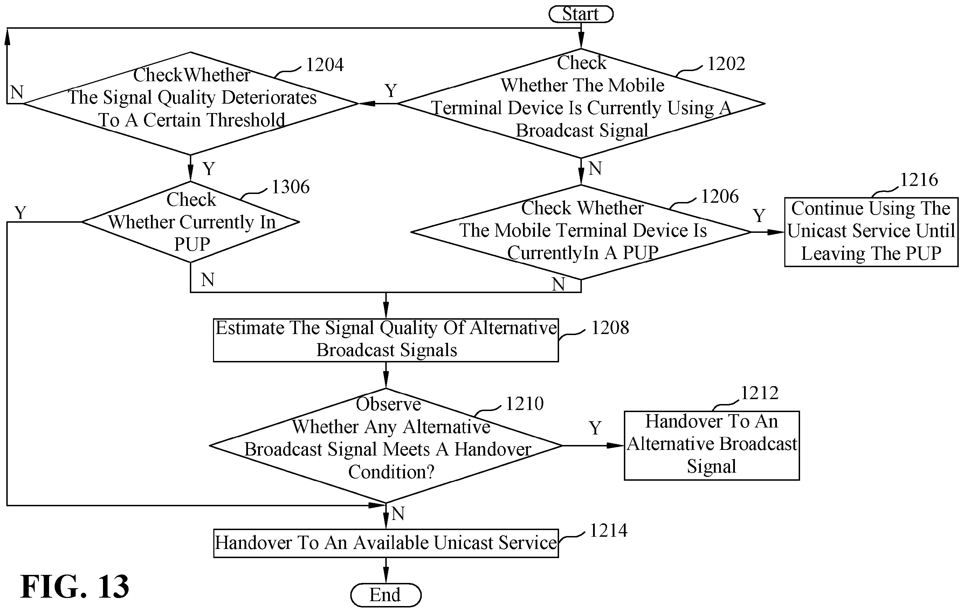

The second approach may also be divided into two situations, currently using a broadcast signal and currently using a unicast signal. In the situation of currently using a broadcast signal, the rule is to observe whether currently in PUP when the signal quality deteriorates to a certain degree. If currently in a PUP, the mobile terminal device is handed over to unicast service; otherwise, start to search for alternative broadcast signal for substitution. If a substitute broadcast signal is available, the mobile terminal device is handed over to one or the best of the substitute broadcast signals; otherwise, handed over to unicast service. In the situation of currently using a unicast signal, the rule is to continue using the unicast service when on the PUP. If not on the PUP, the mobile terminal device starts to search for available broadcast signals. FIG. 13 shows an exemplary flowchart of the second approach, consistent with certain disclosed embodiments.

Referring to FIG. 13, the difference between FIG. 13 and FIG. 12 is that when the mobile terminal device is currently using a broadcast signal and the signal deteriorates to a threshold, the mobile terminal device does not search for the availability of alternative broadcast signal. Instead, the mobile terminal device checks whether it is currently in PUP, as shown in step 1306. If currently in PUP, the mobile terminal device is handed over to unicast service; otherwise the mobile terminal device follows the same steps as in the first approach. If the mobile terminal device is currently using unicast service, the steps are the same as in the first approach, i.e., based on whether currently in a PUP, the mobile terminal device determines whether to handover to a broadcast signal.

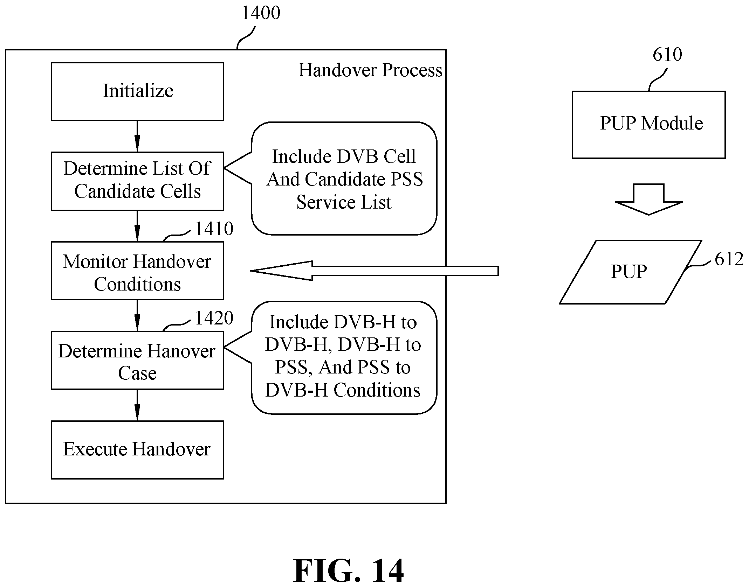

FIG. 14 shows an exemplary working exemplar of a hybrid mobile TV system of DVB-H and 3GPP PSS using PUPs to support the handover decision between broadcast and unicast services, consistent with certain disclosed embodiments, where the process of using predicted route and signal related information to plan PUPs is the same as the aforementioned embodiments. As shown in FIG. 14, the planned PUPs may be used in monitoring handover conditions 1410 of handover procedure 1400 to support a handover decision. The handover procedure is based on the specification defined in current DVB-IPDC Mobility IG standard, and uses PUPs to support the decision on whether handover should be executed between DVB-H and PSS in determining handover case 1420 of handover procedure 1400.

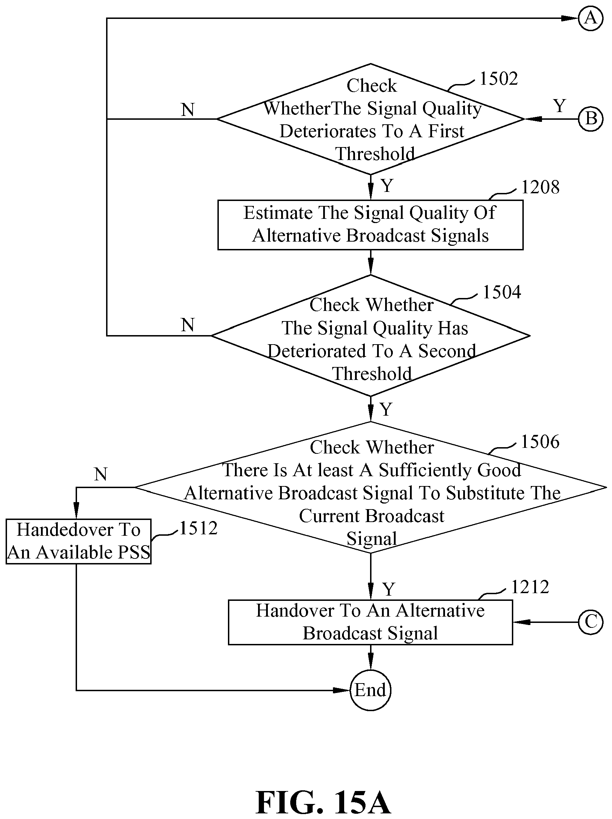

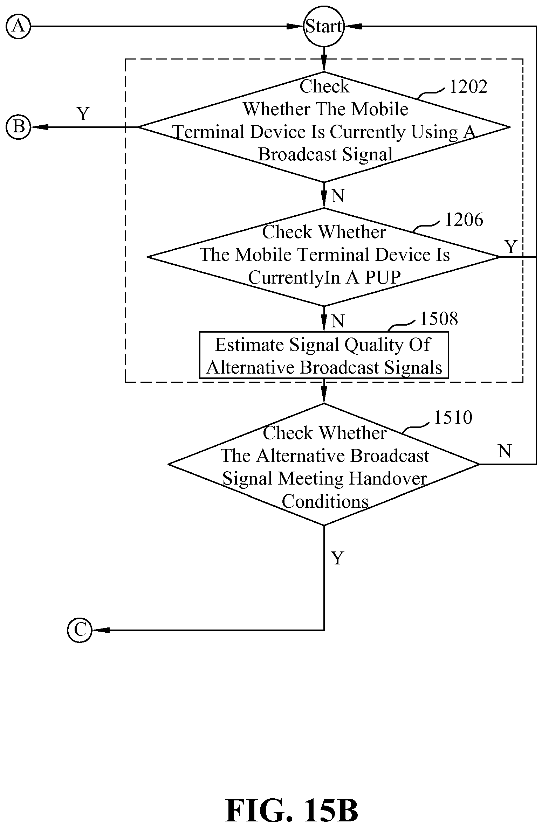

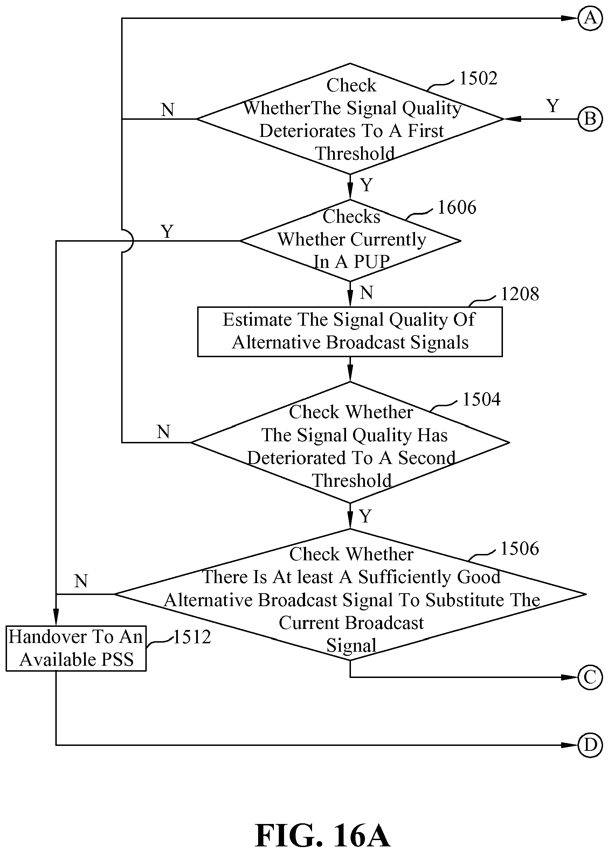

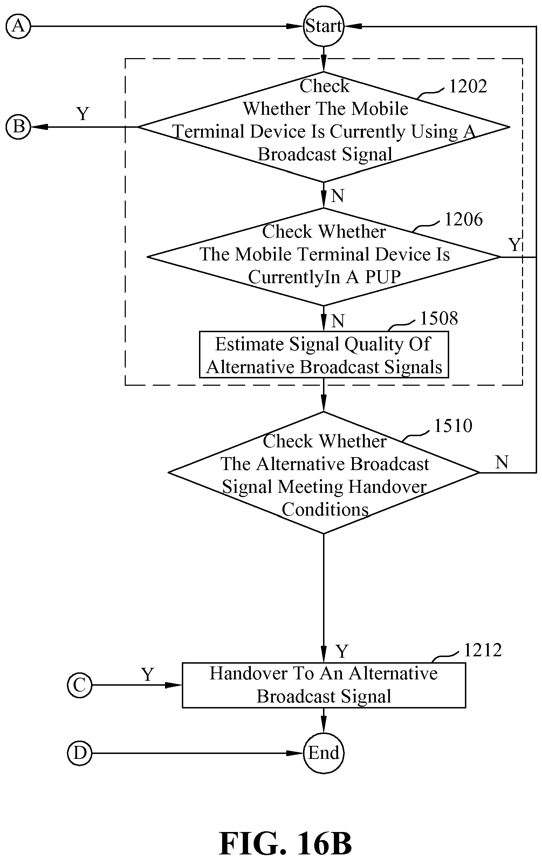

Determine handover case 1420 at least include the handovers from DVB-H to DVB-H, DVB-H to PSS, and PSS to DVB-H. The rule of using PUPs to support the handover decision between DVB-H and PSS is that when the terminal device is currently using unicast service, the terminal device checks whether currently in a PUP. If currently in PUP, the terminal device will start to monitor whether alternative broadcast signal is available only after leaving PUP. When the terminal device is currently using broadcast signal, depending on whether to refer to PUPs, two approaches may be used. FIG. 15 and FIG. 16 show the two approaches for the working exemplar of FIG. 14, respectively.

The exemplary flowchart of FIG. 15 shows the handover approach without referring to PUPs when using broadcast signal, consistent with certain disclosed embodiments. Referring to FIG. 15, when currently using broadcast signal, step 1502 is to check whether the signal quality deteriorates to a first threshold. If so, the terminal device may estimate the quality of alternative broadcast signals and check whether the signal quality has deteriorated to a second threshold, as shown in step 1504. When the signal quality deteriorates to the second threshold, the terminal device may check whether there is sufficiently good alternative broadcast signal to substitute the current broadcast signal, as shown in step 1506. If so, the terminal device is handed over to one or the best of the alternative broadcast signals; otherwise, handover to an available PSS, i.e., unicast service, as shown in step 1512.

When currently using a unicast service, if the terminal device is currently in a PUP, the terminal device continues using the unicast service until leaving the PUP; otherwise, the terminal device may estimate signal quality of alternative broadcast signals, as shown in step 1508, and check whether any alternative broadcast signal meets a handover condition, as shown in step 1510. If so, the terminal device is handed over to one or the best of the alternative broadcast signals; otherwise, the process returns to step 1202.

FIG. 16 shows an exemplary flowchart describing the handover approach of referring to PUPs when using a broadcast signal, consistent with certain disclosed embodiments. The difference between FIG. 16 and FIG. 15 is that when the current broadcast signal deteriorates to a certain degree, the terminal device checks whether currently in a PUP, as shown in step 1606. If so, the terminal device directly handovers to an available PSS, i.e., unicast service, as shown in step 1512, without monitoring the alternative broadcast signal quality. If the terminal device is not in PUP, the approach uses the same steps as in FIG. 15. If the terminal device is currently using a unicast service, then whether the handover decision will back to broadcast signal depends on whether currently in PUP. If currently in PUP, no signal monitoring is necessary; otherwise, the approach estimates signal quality of alternative broadcast signals to monitor whether any alternative broadcast signal meets a handover condition and execute the handover.

The aforementioned exemplars use the terminal device executing the handover to describe the process. However, the terminal device may also use the broadcast network or mobile network to obtain the MUP or PUP data; for example, an external server may follow the above flowchart to find the MUPs, and PUPs and then transmit the result to the terminal device.

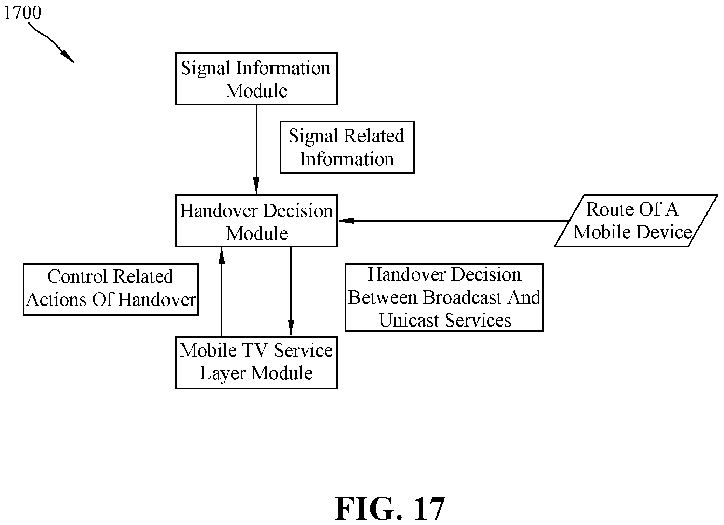

FIG. 17 shows an exemplary schematic view of a terminal device, consistent with certain disclosed embodiments. Referring to FIG. 17, terminal device 1700 at least includes a handover decision module, a signal information module and a mobile TV service layer module. According to the above description, the handover decision module may dynamically obtain the predicted route of a mobile terminal device as well as the signal related information to plan PUPs or evaluate and judge the execution timing of the handover. Based on whether the mobile terminal device is currently in PUP, the handover decision module supports the handover decision between broadcast and unicast services. The signal information module provides the signal related information to the handover decision module as reference in planning PUPs. The mobile TV service layer module may receive the handover decision from the handover decision module and control the related actions of handover.

The related actions of handover at least include the activation, close and pause of the handover between broadcast and unicast service. Terminal device 1700 may be a hybrid mobile TV terminal device, such as, the exemplary structure shown in FIG. 5. The hybrid mobile TV terminal device may further include, such as, streaming rendering module 510, broadcast reception module 530 and mobile network module 560.

In summary, the disclosed exemplary embodiments may provide a handover decision apparatus and method between broadcast and unicast services and the terminal device thereof. The handover decision apparatus may use the dynamically obtained predicted route aided by the signal related information to plan the handover decision between broadcast and unicast services for the terminal device, and is applicable to hybrid mobile TV terminal devices. The handover decision apparatus and method may avoid frequent handovers between broadcast and unicast services. When the terminal device uses unicast service, no useless monitoring on broadcast signal is necessary. When the terminal device enters paths without signal, the terminal device may handover to unicast without monitoring broadcast signals. Therefore, the client end may save energy and improve the usage quality.

Although the present invention has been described with reference to the exemplary disclosed embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A handover decision apparatus (540) between broadcast and unicast services, included in a terminal device (500; 1700), said apparatus comprising:
a planned unicast path module (610) comprising means for using a first inputted data to determine a series of planned unicast paths, at least including a predicted route for a mobile terminal device (500; 1700) and signal related information, wherein a signal information module (550) is adapted to process the signal related information from a broadcast reception module (530) or a mobile network module (560); and
a handover evaluation and judge module (620) for performing a handover evaluation and judging the timing of handover execution, and for reaching a handover decision between broadcast and unicast services,
**characterised in that**
the planned unicast path module (610) also comprises means adapted to find and label all mandatory unicast paths along said predicted route for said mobile terminal device, said mandatory unicast paths being paths during which the mobile terminal device cannot receive service via broadcast signal, and must use unicast signal to continue the service,
and adapted to merge any two mandatory unicast paths having a time interval between ending time of a first mandatory unicast path and starting time of a second mandatory unicast path less than a threshold into a longer mandatory unicast path, and adapted to obtain a series of planned unicast paths from all generated mandatory unicast paths; and
**in that** the handover evaluation and judge module (620) also comprises means adapted to use a second inputted data, at least including said series of planned unicast paths to evaluate and determine the execution timing of a handover and to support the handover decision between broadcast and unicast services.

2. The handover decision apparatus as claimed in claim 1, wherein said second inputted data further includes current location information of said mobile terminal device (500; 1700).

3. The handover decision apparatus as claimed in claim 1, wherein said first inputted data further includes a predicted velocity of said mobile terminal device (500; 1700).

4. A terminal device (500; 1700), having capabilities of both receiving broadcast signal and unicast signal using mobile network, including a handover decision apparatus (540) according to claim 1, and further comprising:
a signal information module (550), comprising means for providing signal related information to said handover decision apparatus (540) as reference for planning said series of planned unicast paths along said predicted route, wherein the signal information module (550) is adapted to process the signal related information from a broadcast reception module (530) or a mobile network module (560); and
a mobile TV service layer module (520), comprising means for receiving said handover decision from said handover decision module, and for controlling related actions of handover.

5. The terminal device as claimed in claim 4, wherein said terminal device further includes means capable of path prediction.

6. The terminal device as claimed in claim 4, wherein said means for controlling related actions of handover comprises means for controlling at least related actions of activation, close and pause of unicast service and start and stop of receiving broadcast service.

7. The terminal device as claimed in claim 4, wherein said terminal device is a hybrid mobile TV terminal device, further including a streaming rendering module (510), the broadcast reception module (530) and the mobile network module (560).

8. A handover decision method between broadcast and unicast services, applicable to a terminal device (500; 1700), said method comprising:
using, by a planned unicast module (610), a predicted route of a mobile terminal device and signal related information, wherein a signal information module (550) processes the signal related information from a broadcast reception module (530) or a mobile network module (560), and
supporting a handover decision between broadcast and unicast services,
**characterised in that** the method includes finding and labelling, by the planned unicast path module, all mandatory unicast paths along said predicted route for said mobile terminal device,
said mandatory unicast paths being paths during which the mobile terminal device cannot receive service via broadcast signal, and must use unicast signal to continue the service; and
**in that** for said all mandatory unicast paths, the method includes merging any two mandatory unicast paths having a time interval between ending time of a first mandatory unicast path and starting time of a second mandatory unicast path less than a threshold into a longer mandatory unicast path, and obtaining a series of planned unicast paths from all generated mandatory unicast paths; and
using said series of planned unicast paths to evaluate and determine the timing and
execution of a handover and to support the handover decision between broadcast and unicast services.

9. The handover decision method as claimed in claim 8, wherein the step of finding all mandatory unicast paths for said mobile terminal device (500; 1700) along said predicted route further includes:
checking whether said mobile terminal device passes along a path having no broadcast signal coverage, and if so, labeling said path as a mandatory unicast path;
checking whether said mobile terminal device passes along a path with poor broadcast signal reception, and if so, labeling said path with poor broadcast signal reception as a mandatory unicast path; and
checking whether said predicted route of said mobile terminal device has any mandatory unicast paths, and if so, recording starting and ending locations of each of said mandatory unicast paths and corresponding starting and ending times; otherwise,
terminating.

10. The handover decision method as claimed in claim 8, wherein the step of merging any two mandatory unicast paths having a time interval less than the threshold into a longer mandatory unicast path further includes:
finding a most recent unchecked mandatory unicast path and labeling said most recent unchecked mandatory unicast path as checked;
checking said all mandatory unicast paths one by one and merging those mandatory unicast paths having time intervals less than the threshold into a longer mandatory unicast path.

11. The handover decision method as claimed in claim 8, wherein when said mobile terminal device (500; 1700) uses a broadcast signal, said method does not refer to said series of planned unicast paths when deciding whether to handover between broadcast and unicast services.

12. The handover decision method as claimed in claim 8, wherein regardless of said mobile terminal device (500; 1700) using a broadcast signal or unicast service, said method always refers to said series of planned unicast paths when deciding whether to handover between broadcast and unicast services.

13. The handover decision method as claimed in claim 12, wherein said step of deciding whether to handover between broadcast and unicast services further includes:
when said mobile terminal device (500; 1700) is currently using a broadcast signal, and
when signal quality deteriorates to a certain degree, observing whether any alternative broadcast signal meets a handover condition, and if so, undergoing handover to said alternative broadcast signal; otherwise, undergoing handover to unicast service; and when said mobile terminal device (500; 1700) is currently using unicast service, and if said mobile terminal device is in said series of planned unicast paths, continuing using unicast service; otherwise, observing whether an alternative broadcast signal is available,
and if so, undergoing handover to said alternative broadcast signal.

14. The handover decision method as claimed in claim 13, wherein said step of deciding whether to handover between broadcast and unicast services further includes:
when said mobile terminal device (500; 1700) is currently using a broadcast signal, and
when signal quality deteriorates to a certain degree, observing whether said mobile terminal device is in said series of planned unicast paths, and if so, undergoing handover to unicast service; otherwise, observing whether an alternative broadcast signal meets a handover condition, and if so, undergoing handover to said alternative broadcast signal;
otherwise, undergoing handover to an available unicast service; and
when said mobile terminal device (500; 1700) is currently using unicast service, and if said mobile terminal device is in said series of planned unicast paths, continuing using unicast service; otherwise, observing whether an alternative broadcast signal is available.

15. The handover decision method as claimed in claim 13, wherein if more than one alternative broadcast signal meets the handover condition, handover is made to a chosen alternative broadcast signal.

16. The handover decision method as claimed in claim 14, wherein if more than one alternative broadcast signal meets the handover condition, handover is made to a chosen alternative broadcast signal.

## Patentansprüche

1. Übergabeentscheidungsvorrichtung (540) zwischen Broadcast- und Unicast-Diensten, enthalten in einem Endgerät (500; 1700), die Vorrichtung umfassend:
ein geplantes Unicast-Pfad-Modul (610), umfassend Mittel zum Verwenden erster eingegebener Daten zur Ermittlung einer Reihe von geplanten Unicast-Pfaden,
mindestens enthaltend eine vorhergesagte Route für ein mobiles Endgerät (500; 1700) und signalbezogene Informationen, wobei ein Signalinformationsmodul (550) ausgelegt ist zum Verarbeiten der signalbezogenen Informationen von einem Broadcast-Empfangsmodul (530) oder einem Mobil-Netzwerkmodul (560).
ein Übergabebewertungs- und -beurteilungsmodul (620) zum Durchführen einer Übergabebewertung und -beurteilung des Timings der Übergabeausführung und zum Erreichen einer Übergabeentscheidung zwischen Broadcast- und Unicast-Diensten,
**dadurch gekennzeichnet, dass**
das geplante Unicast-Pfad-Modul (610) außerdem Mittel umfasst, die ausgelegt sind zum Finden und Kennzeichnen aller obligatorischen Unicast-Pfade entlang der vorhergesagten Route für das mobile Endgerät, wobei die obligatorischen Unicast-Pfade Pfade sind, während denen das mobile Endgerät keinen Dienst über das Broadcast-Signal empfangen kann und das Unicast-Signal verwenden muss, um den Dienst fortzusetzen, und ausgelegt ist zum Zusammenführen von zwei beliebigen obligatorischen Unicast-Pfaden, die ein Zeitintervall zwischen der Beendigungszeit eines ersten obligatorischen Unicast-Pfads und der Startzeit eines zweiten obligatorischen Unicast-Pfads aufweisen, das geringer als ein Schwellenwert ist, zu einem längeren obligatorischen Unicast-Pfad, und ausgelegt ist zum Gewinnen einer Reihe von geplanten Unicast-Pfaden aus allen generierten obligatorischen Unicast-Pfaden; und dadurch, dass das Übergabebewertungs- und -beurteilungsmodul (620) außerdem Mittel umfasst, die ausgelegt sind zum Verwenden zweiter eingegebener Daten, die mindestens die Reihe von geplanten Unicast-Pfaden einschließen, um das Ausführungs-Timing einer Übergabe zu bewerten und zu ermitteln und um die Übergabeentscheidung zwischen Broadcast- und Unicast-Diensten zu unterstützen.

2. Übergabeentscheidungsvorrichtung nach Anspruch 1, wobei die zweiten eingegebenen Daten des Weiteren aktuelle Standortinformationen des mobilen Endgeräts (500; 1700) einschließen.

3. Übergabeentscheidungsvorrichtung nach Anspruch 1, wobei die ersten eingegebenen Daten des Weiteren eine vorhergesagte Geschwindigkeit des mobilen Endgeräts (500; 1700) einschließen.

4. Endgerät (500; 1700), das über Fähigkeiten zum Empfangen von sowohl Broadcast-Signal als auch Unicast-Signal unter Verwendung eines Mobil-Netzwerks verfügt, eine Übergabeentscheidungsvorrichtung (540) nach Anspruch 1 enthält und des Weiteren umfasst:
ein Signalinformationsmodul (550), umfassend Mittel zum Bereitstellen von signalbezogenen Informationen an die Übergabeentscheidungsvorrichtung (540) als Referenz zur Planung der Reihe von geplanten Unicast-Pfaden entlang der vorhergesagten Route, wobei das Signalinformationsmodul (550) ausgelegt ist zum Verarbeiten der signalbezogenen Informationen von einem Broadcast-Empfangsmodul (530) oder einem Mobil-Netzwerkmodul (560); und
ein Mobil-TV-Dienstebenenmodul (520), umfassend Mittel zum Empfangen der Übergabeentscheidung von dem Übergabeentscheidungsmodul und zum Steuern von Aktionen im Zusammenhang mit der Übergabe.

5. Endgerät nach Anspruch 4, wobei das Endgerät des Weiteren Mittel enthält, die zur Pfadvorhersage in der Lage sind.

6. Endgerät nach Anspruch 4, wobei die Mittel zum Steuern von Aktionen im Zusammenhang mit der Übergabe Mittel zum Steuern von mindestens Aktionen im Zusammenhang mit dem Aktivieren, dem Schließen und dem Pausieren des Unicast-Diensts und dem Starten und Anhalten des Empfangs von Unicast-Dienst umfassen.

7. Endgerät nach Anspruch 4, wobei das Endgerät ein hybrides Mobil-TV-Endgerät ist, das des Weiteren ein Streaming-Wiedergabemodul (510), das Broadcast-Empfangsmodul (530) und das Mobil-Netzwerkmodul (560) enthält.

8. Übergabeentscheidungsverfahren zwischen Broadcast- und Unicast-Diensten, anwendbar auf einem Endgerät (500; 1700), das Verfahren umfassend:
das Verwenden, durch ein geplantes Unicast-Pfad-Modul (610), einer vorhergesagten Route eines mobilen Endgeräts und signalbezogenen Informationen, wobei ein Signalinformationsmodul (550) die signalbezogenen Informationen von einem Broadcast-Empfangsmodul (530) oder einem Mobil-Netzwerkmodul (500) verarbeitet,
und
das Unterstützen einer Übergabeentscheidung zwischen Broadcast- und UnicastDiensten,
**dadurch gekennzeichnet, dass** das Verfahren das Finden und Kennzeichnen, durch das geplante Unicast-Pfad-Modul, aller obligatorischen Unicast-Pfade entlang der vorhergesagten Route für das mobile Endgerät einschließt, wobei die obligatorischen Unicast-Pfade Pfade sind, während denen das mobile Endgerät keinen Dienst über das Broadcast-Signal empfangen kann und das Unicast-Signal verwenden muss, um den Dienst fortzusetzen; und dass für alle die obligatorischen Unicast-Pfade das Verfahren einschließt das Zusammenführen von zwei beliebigen obligatorischen Unicast-Pfaden, die ein Zeitintervall zwischen der Beendigungszeit eines ersten obligatorischen Unicast-Pfads und der Startzeit eines zweiten obligatorischen Unicast-Pfads aufweisen, das geringer als ein Schwellenwert ist, zu einem längeren obligatorischen Unicast-Pfad, und das Gewinnen einer Reihe von geplanten Unicast-Pfaden aus allen generierten obligatorischen Unicast-Pfaden; und
das Verwenden der Reihe von geplanten Unicast-Pfaden, um das Timing und die Ausführung einer Übergabe zu bewerten und zu ermitteln und um die Übergabeentscheidung zwischen Broadcast- und Unicast-Diensten zu unterstützen.

9. Übergabeentscheidungsverfahren nach Anspruch 8, wobei der Schritt des Findens aller obligatorischen Unicast-Pfade für das mobile Endgerät (500; 1700) entlang der vorhergesagten Route des Weiteren einschließt:
das Prüfen, ob sich das mobile Endgerät entlang einem Pfad ohne BroadcastSignalabdeckung bewegt, und wenn das der Fall ist, das Kennzeichnen des Pfads als einen obligatorischen Unicast-Pfad;
das Prüfen, ob sich das mobile Endgerät entlang einem Pfad mit schwacher Broadcast-Signalabdeckung bewegt, und wenn das der Fall ist, das Kennzeichnen des Pfads mit schwachem Broadcast-Signalempfang als einen obligatorischen Unicast-Pfad; und
das Prüfen, ob die vorhergesagte Route des mobilen Endgeräts über irgendwelche obligatorischen Unicast-Pfade verfügt, und wenn das der Fall ist, das Aufzeichnen von Start- und Endestandorten von jedem der obligatorischen Unicast-Pfade und der entsprechenden Start- und Endezeiten; ansonsten das Beenden.

10. Übergabeentscheidungsverfahren nach Anspruch 8, wobei der Schritt des Zusammenführens von zwei beliebigen obligatorischen Unicast-Pfaden, die ein Zeitintervall aufweisen, das geringer als der Schwellenwert ist, zu einem längeren obligatorischen Unicast-Pfad des Weiteren einschließt:
das Suchen nach einem aktuellsten ungeprüften obligatorischen Unicast-Pfad und das Kennzeichnen des aktuellsten ungeprüften obligatorischen Unicast-Pfads als geprüft;
das Prüfen aller obligatorischen Unicast-Pfade einzeln und das Zusammenführen derjenigen obligatorischen Unicast-Pfaden, die über Zeitintervalle verfügen, die geringer als der Schwellenwert sind, zu einem längeren obligatorischen Unicast-Pfad.

11. Übergabeentscheidungsverfahren nach Anspruch 8, wobei, wenn das mobile Endgerät (500; 1700) ein Broadcast-Signal verwendet, das Verfahren sich nicht auf die Reihe von geplanten Unicast-Pfaden bezieht, wenn entschieden wird, ob die Übergabe zwischen Broadcast- und Unicast-Diensten erfolgen soll.

12. Übergabeentscheidungsverfahren nach Anspruch 8, wobei unabhängig davon, ob das mobile Endgerät (500; 1700) ein Broadcast-Signal oder den Unicast-Dienst verwendet, das Verfahren sich immer auf die Reihe von geplanten Unicast-Pfaden bezieht, wenn entschieden wird, ob die Übergabe zwischen Broadcast- und Unicast-Diensten erfolgen soll.

13. Übergabeentscheidungsverfahren nach Anspruch 12, wobei der Schritt des Entscheidens, ob die Übergabe zwischen Broadcast- und Unicast-Diensten erfolgen soll, des Weiteren einschließt:
wenn das mobile Endgerät (500; 1700) aktuell ein Broadcast-Signal verwendet, und
wenn sich die Signalqualität bis zu einem gewissen Grad verschlechtert, das Beobachten, ob ein alternatives Broadcast-Signal die Übergabebedingung erfüllt,
und wenn das der Fall ist, das Durchführen der Übergabe zu dem alternativen Broadcast-Signal; ansonsten das Durchführen der Übergabe an den Unicast-Dienst;
und
wenn das mobile Endgerät (500; 1700) aktuell den Unicast-Dienst verwendet und
wenn sich das mobile Endgerät in der Reihe von geplanten Unicast-Pfaden befindet,
das Fortsetzen der Verwendung des Unicast-Diensts; ansonsten das Beobachten, ob ein alternatives Broadcast-Signal verfügbar ist, und wenn das der Fall ist, das Durchführen der Übergabe zu dem alternativen Broadcast-Signal.

14. Übergabeentscheidungsverfahren nach Anspruch 13, wobei der Schritt des Entscheidens, ob die Übergabe zwischen Broadcast- und Unicast-Diensten erfolgen soll, des Weiteren einschließt:
wenn das mobile Endgerät (500; 1700) aktuell ein Broadcast-Signal verwendet, und
wenn sich die Signalqualität bis zu einem gewissen Grad verschlechtert, das Beobachten, ob sich das mobile Endgerät in der Reihe von geplanten Unicast-Pfaden befindet, und wenn das der Fall ist, das Durchführen der Übergabe zum Unicast-Dienst; ansonsten das Beobachten, ob ein alternatives Broadcast-Signal eine Übergabebedingung erfüllt, und wenn das der Fall ist, das Durchführen der Übergabe zu dem alternativen Broadcast-Signal; ansonsten das Durchführen der Übergabe an einen verfügbaren Unicast-Dienst; und
wenn das mobile Endgerät (500; 1700) aktuell den Unicast-Dienst verwendet und
wenn sich das mobile Endgerät in der Reihe von geplanten Unicast-Pfaden befindet, das Fortsetzen der Verwendung des Unicast-Diensts; ansonsten das Beobachten, ob ein alternatives Broadcast-Signal verfügbar ist.

15. Übergabeentscheidungsverfahren nach Anspruch 13, wobei, wenn mehr als ein alternatives Broadcast-Signal die Übergabebedingung erfüllt, die Übergabe zu einem ausgewählten alternativen Broadcast-Signal erfolgt.

16. Übergabeentscheidungsverfahren nach Anspruch 14, wobei, wenn mehr als ein alternatives Broadcast-Signal die Übergabebedingung erfüllt, die Übergabe zu einem ausgewählten alternativen Broadcast-Signal erfolgt.

## Revendications

1. Un appareil de décision de transfert (540) entre des services de multidiffusion et de monodiffusion, inclus dans un dispositif terminal (500 ; 1700), ledit appareil comprenant :
un module de trajets de monodiffusion planifiée (610) comprenant des moyens pour utiliser une première entrée de données afin de déterminer une série de trajets de monodiffusion planifiée, incluant au moins un itinéraire prédit pour un dispositif terminal mobile (500 ; 1700) et des informations liées au signal, où un module d'informations de signal (550) est conçu pour traiter les informations liées au signal d'un module de réception de multidiffusion (530) ou d'un module de réseau mobile (560) ; et
un module d'évaluation et de jugement de transfert (620) pour réaliser une évaluation de transfert et un jugement de moment d'exécution de transfert, et pour aboutir à une décision de transfert entre des services de multidiffusion et de monodiffusion,
**caractérisé en ce que**
le module de trajets de monodiffusion planifiée (610) comporte également des moyens conçus pour trouver et marquer tous les trajets de monodiffusion obligatoire le long dudit itinéraire prédit pour ledit dispositif terminal mobile, lesdits trajets de monodiffusion obligatoire étant les trajets durant lesquels le dispositif terminal mobile ne peut pas recevoir de service via un signal de multidiffusion, et doit utiliser un signal de monodiffusion pour continuer le service,
et conçu pour fusionner deux trajets de monodiffusion obligatoire quelconques ayant un intervalle de temps entre un temps de fin d'un premier trajet de monodiffusion obligatoire et un temps de début d'un deuxième trajet de monodiffusion obligatoire inférieur à un seuil dans un trajet de monodiffusion obligatoire plus long, et conçu pour obtenir une série de trajets de monodiffusion planifiée de tous les trajets de monodiffusion obligatoire générés ; et **en ce que** le module d'évaluation et de jugement de transfert (620) comprend également des moyens conçus pour utiliser une deuxième entrée de données, incluant au moins ladite série de trajets de monodiffusion planifiée pour évaluer et déterminer le moment et l'exécution d'un transfert et pour soutenir la décision de transfert entre les services de multidiffusion et de monodiffusion.

2. L'appareil de décision de transfert tel que revendiqué dans la revendication 1, où ladite deuxième entrée de données inclut en outre des informations de localisation actuelle dudit dispositif terminal mobile (500 ; 1700).

3. L'appareil de décision de transfert tel que revendiqué dans la revendication 1, où ladite première entrée de données inclut en outre une vitesse prédite dudit dispositif terminal mobile (500 ; 1700).

4. Un dispositif terminal (500 ; 1700), ayant des capacités de réception à la fois de signal de multidiffusion et de signal de monodiffusion en utilisant un réseau mobile, incluant un appareil de décision de transfert (540) selon la revendication 1, et comprenant en outre :
un module d'informations de signal (550), comprenant des moyens pour fournir des informations liées au signal audit appareil de décision de transfert (540) comme référence pour planifier ladite série de trajets de monodiffusion planifiée le long dudit itinéraire prédit, où le module d'informations de signal (550) est conçu pour traiter les informations liées au signal d'un module de réception de multidiffusion (530) ou d'un module de réseau mobile (560) ; et
un module de couche de service TV mobile (520), comprenant des moyens pour recevoir ladite décision de transfert dudit module de décision de transfert, et pour commander des actions de transfert apparentées.

5. Le dispositif terminal tel que revendiqué dans la revendication 4, où ledit dispositif terminal inclut en outre des moyens capables de prédiction de trajet.

6. Le dispositif terminal tel que revendiqué dans la revendication 4, où lesdits moyens pour commander des actions de transfert apparentées comprennent des moyens pour commander au moins des actions apparentées d'activation, de fermeture et de pause du service monodiffusion et de démarrage et d'arrêt de réception de service multidiffusion.

7. Le dispositif terminal tel que revendiqué dans la revendication 4, où ledit dispositif terminal est un dispositif terminal TV mobile hybride, incluant en outre un module de rendu en continu (510), le module de réception de multidiffusion (530) et le module de réseau mobile (560).

8. Une méthode de décision de transfert entre des services de multidiffusion et de monodiffusion, applicable à un dispositif terminal (500 ; 1700), ladite méthode comprenant :
le fait d'utiliser, par un module de monodiffusion planifiée (610), un itinéraire prédit d'un dispositif terminal mobile et d'informations liées au signal, où un module d'informations de signal (550) traite les informations liées au signal d'un module de réception de multidiffusion (530) ou d'un module de réseau mobile (560), et
le fait de soutenir une décision de transfert entre des services de multidiffusion et de monodiffusion,
**caractérisée en ce que** la méthode inclut le fait de trouver et de marquer, par le module de trajets de monodiffusion planifiée, tous les trajets monodiffusion obligatoire le long dudit itinéraire prédit pour ledit dispositif terminal mobile, lesdits trajets de monodiffusion obligatoire étant des trajets durant lesquels le dispositif terminal mobile ne peut pas recevoir de service via un signal de multidiffusion, et doit utiliser le signal de monodiffusion pour continuer le service ; et
**en ce que** pour tous lesdits trajets de monodiffusion obligatoire, la méthode inclut le fait de fusionner deux trajets de monodiffusion obligatoire quelconques ayant un intervalle de temps entre un temps de fin d'un premier trajet de monodiffusion obligatoire et un temps de début d'un deuxième trajet de monodiffusion obligatoire inférieur à un seuil dans un trajet de monodiffusion obligatoire plus long, et d'obtenir une série de trajets de monodiffusion planifiée de tous les trajets de monodiffusion obligatoire générés ; et
le fait d'utiliser ladite série de trajets de monodiffusion planifiée pour évaluer et
déterminer le moment d'exécution d'un transfert et pour soutenir la décision de transfert entre les services de multidiffusion et de monodiffusion.

9. La méthode de décision de transfert telle que revendiquée dans la revendication 8, où l'étape consistant à trouver tous les trajets de monodiffusion obligatoire pour ledit dispositif terminal mobile (500 ; 1700) le long dudit itinéraire prédit inclut en outre :
le fait de vérifier si ledit dispositif terminal mobile passe le long d'un trajet n'ayant aucune couverture de signal de multidiffusion, et le cas échéant, le fait de marquer ledit trajet comme un trajet de monodiffusion obligatoire ;
le fait de vérifier si ledit dispositif terminal mobile passe le long d'un trajet avec une mauvaise réception de signal de multidiffusion, et le cas échéant, le fait de marquer ledit trajet avec une mauvaise réception de signal de multidiffusion comme un trajet de monodiffusion obligatoire ; et
le fait de vérifier si ledit itinéraire prédit dudit dispositif terminal mobile a des trajets de monodiffusion obligatoire quelconques, et le cas échéant, le fait d'enregistrer des localisations de début et de fin de chacun desdits trajets de monodiffusion obligatoire et les moments de début et de fin correspondants ; sinon, le fait de mettre un terme.

10. La méthode de décision de transfert telle que revendiquée dans la revendication 8, où l'étape consistant à fusionner deux trajets de monodiffusion obligatoire quelconques ayant un intervalle de temps inférieur au seuil en un trajet de monodiffusion obligatoire plus long inclut en outre :
le fait de trouver un trajet de monodiffusion obligatoire non vérifié le plus récent et de marquer ledit trajet de monodiffusion obligatoire non vérifié le plus récent comme vérifié ;
le fait de vérifier tous lesdits trajets de monodiffusion obligatoire un par un et de fusionner les trajets de monodiffusion obligatoire ayant des intervalles de temps inférieurs au seuil en un trajet de monodiffusion obligatoire plus long.

11. La méthode de décision de transfert telle que revendiquée dans la revendication 8, où lorsque ledit dispositif terminal mobile (500 ; 1700) utilise un signal de multidiffusion, ladite méthode ne se réfère pas auxdites séries de trajets de monodiffusion planifiée au moment de décider de transférer ou non entre les services de multidiffusion et de monodiffusion.

12. La méthode de décision de transfert telle que revendiquée dans la revendication 8, où indépendamment du fait de savoir si ledit dispositif terminal mobile (500 ; 1700) utilise un signal de multidiffusion ou un service de monodiffusion, ladite méthode se réfère toujours auxdites séries de trajets de monodiffusion planifiée au moment de décider de transférer ou non entre les services de multidiffusion et de monodiffusion.

13. La méthode de décision de transfert telle que revendiquée dans la revendication 12, où ladite étape de décider de transférer ou non entre des services de multidiffusion et de monodiffusion inclut en outre :
lorsque ledit dispositif terminal mobile (500 ; 1700) utilise actuellement un signal de multidiffusion, et lorsque la qualité de signal se détériore jusqu'à un certain degré, le fait d'observer si un autre signal de multidiffusion quelconque remplit une condition de transfert, et le cas échéant, le fait de subir un transfert vers ledit autre signal de multidiffusion ; sinon, le fait de subir un transfert vers le service de monodiffusion ; et
lorsque ledit dispositif terminal mobile (500 ; 1700) utilise actuellement un service de monodiffusion, et si ledit dispositif terminal mobile est dans ladite série de trajets de monodiffusion planifiée, le fait de continuer d'utiliser le service de monodiffusion ;
sinon, le fait d'observer si un autre signal de multidiffusion est disponible, et le cas échéant, le fait de subir un transfert vers ledit autre signal de multidiffusion.

14. La méthode de décision de transfert telle que revendiquée dans la revendication 13, où ladite étape consistant à décider de transférer ou non entre des services de multidiffusion et de monodiffusion inclut en outre :
lorsque ledit dispositif terminal mobile (500 ; 1700) utilise actuellement un signal de multidiffusion, et lorsque la qualité de signal se détériore jusqu'à un certain degré, le fait d'observer si ledit dispositif terminal mobile est dans ladite série de trajets de monodiffusion planifiée, et le cas échéant, le fait de subir un transfert vers le service de monodiffusion ; sinon, le fait d'observer si un autre signal de multidiffusion quelconque remplit une condition de transfert, et le cas échéant, le fait de subir un transfert vers ledit autre signal de multidiffusion ; sinon, le fait de subir un transfert vers un service de monodiffusion disponible ; et
lorsque ledit dispositif terminal mobile (500 ; 1700) utilise actuellement un service de monodiffusion, et si ledit dispositif terminal mobile est dans ladite série de trajets de monodiffusion planifiée, le fait de continuer d'utiliser le service de monodiffusion ;
sinon, le fait d'observer si un autre signal de multidiffusion est disponible.

15. La méthode de décision de transfert telle que revendiquée dans la revendication 13, ou si plus d'un autre signal de multidiffusion remplit la condition de transfert, le transfert est réalisé vers un autre signal de multidiffusion choisi.

16. La méthode de décision de transfert telle que revendiquée dans la revendication 14, ou si plus d'un autre signal de multidiffusion remplit la condition de transfert, le transfert est réalisé vers un autre signal de multidiffusion choisi.
